# FASCICULE DE BREVET EUROPEEN

(11) **EP 2 350 836 B1**
(45) Date de publication et mention de la délivrance du brevet: **17.01.2018**
(21) Numéro de dépôt: 09740115.2
(22) Date de dépôt: 20.10.2009
(51) Int. Cl.: G06F 12/02, G06F 13/16, G06F 12/14, G06F 9/50

(54) **DISPOSITIF POUR GERER DES TAMPONS DE DONNEES DANS UN ESPACE MEMOIRE REPARTI SUR UNE PLURALITE D'ELEMENTS DE MEMOIRE**
EINRICHTUNG ZUR VERWALTUNG VON DATENPUFFERN IN EINEM IN MEHRERE SPEICHERELEMENTE AUFGETEILTEN SPEICHERRAUM
DEVICE FOR MANAGING DATA BUFFERS IN A MEMORY SPACE DIVIDED INTO A PLURALITY OF MEMORY ELEMENTS

(30) Priorité: 24.10.2008 FR 0805926
(43) Date de publication de la demande: 03.08.2011
(73) Titulaire: Commissariat à l'Énergie Atomique et aux Énergies Alternatives, 75015 Paris (FR)
(72) Inventeur: DAVID, Raphaël, F-91440 Bures sur Yvette (FR); VENTROUX, Nicolas, F-91440 Bures sur Yvette (FR)
(74) Mandataire: Lucas, Laurent Jacques
(86) Numéro de dépôt international: PCT/EP2009/063715
(87) Numéro de publication internationale: WO 2010/046355

(56) Documents cités:
- EP-A- 0 294 499
- US-A1- 2004 049 600
- RENAUD LOTTIAUX AND CHRISTINE MORIN: "A Cluster Operating System Based on Software COMA Memory Management" PROCEEDINGS 2ND WORKSHOP ON SOFTWARE DISTRIBUTED SHARED MEMORY (WSDSM 2000), [Online] mai 2000 (2000-05), pages 1-7, XP002534061 Santa Fe, NM, USA Extrait de l'Internet: URL:http://citeseerx.ist.psu.edu/viewdoc/s ummary?doi=10.1.1.1.7321> [extrait le 2009-09-24]
- JEGOU Y: "Implementation of page management in mome,a user-level DSM" CLUSTER COMPUTING AND THE GRID, 2003. PROCEEDINGS. CCGRID 2003. 3RD IE EE/ACM INTERNATIONAL SYMPOSIUM ON 12-15 MAY 2003, PISCATAWAY, NJ, USA,IEEE, 12 mai 2003 (2003-05-12), pages 479-486, XP010639788 ISBN: 978-0-7695-1919-7

## Description

La présente invention concerne un dispositif pour gérer des tampons de données dans un espace mémoire réparti sur une pluralité d'éléments de mémoire. Elle s'applique par exemple dans le domaine des systèmes embarqués à forte puissance de calcul.

Les systèmes embarqués actuels tendent à mettre en oeuvre des traitements toujours plus complexes. A titre d'exemple, les téléphones mobiles doivent implémenter des chaînes complètes de télécommunication. Les dispositifs embarqués de vidéo-surveillance doivent implémenter des chaînes complètes de traitement de l'image. Parallèlement à cette augmentation de la complexité des applications, le nombre d'applications embarquées au sein d'un même appareil augmente lui aussi constamment. Ceci s'explique notamment par la volonté de créer des objets toujours plus polyvalents, en associant par exemple dans un téléphone mobile de type « smartphone » ou dans un « personnal digital assistant » des fonctions de télécommunication, des fonctions de multimédia, des jeux ou encore des fonctions de positionnement satellitaire. Outre la nécessité de fournir des puissances de calcul toujours plus grandes, il faut également être capable d'optimiser l'architecture spécifiquement en fonction de l'environnement courant d'exécution. Il s'agit là de l'un des problèmes techniques que la présente invention se propose de résoudre.

Par ailleurs, nombre de systèmes embarqués tendent vers une plus grande ouverture, laissant les utilisateurs libres de les utiliser à leur guise pour exécuter leurs propres applications. Cette ouverture rend peu efficaces les solutions statiques d'optimisation de l'architecture du système, couramment dites solutions « hors exécution » ou « hors-ligne », puisque le contexte applicatif ne peut pas être entièrement déterminé en phase de conception. Notamment, compte tenu de l'évolution de la capacité des capteurs vidéos et des convertisseurs rapides, le type et le volume des données manipulée sont difficiles à déterminer. Par ailleurs, dans bon nombre d'applications, le traitement à réaliser varie en fonction des données d'entrée. A titre d'exemple, les applications de vidéo-surveillance visent typiquement à rechercher des objets dans une scène puis, lorsqu'un ou plusieurs objet ont été détectés, l'application évolue pour passer dans une phase de suivi de l'objet détecté, voire d'analyse. Il s'agit là encore de l'un des problèmes techniques que la présente invention se propose de résoudre.

Les solutions non-statiques d'optimisation de l'architecture du système, couramment dite solutions « pendant l'exécution » ou « en-ligne », ne nécessitent pas de prédire l'ensemble des scénarii d'utilisation. Il s'agit essentiellement d'implémenter des mécanismes dynamiques de contrôle des ressources, par exemple des mécanismes d'allocation des ressources de calcul ou d'allocation des ressources de mémorisation de telle sorte qu'ils s'adaptent rapidement au contexte applicatif. Des tâches de calculs intensifs côtoient alors des tâches dominées par le contrôle, avec des interactions très fortes entre ces tâches qui communiquent entre elles. Toutefois, la mise en place de tels mécanismes de contrôle peut être coûteuse en performance. Il s'agit là encore de l'un des problèmes techniques que la présente invention se propose de résoudre.

En effet, les tâches communiquent notamment par l'intermédiaire de tampons de données. Un tampon est une zone de la mémoire dans laquelle une seule tâche productrice peut écrire et dans laquelle plusieurs tâches consommatrices peuvent potentiellement lire. Dans le cadre d'une application très complexe, le nombre de tampons mémoire nécessaires à l'exécution de l'application peut ainsi dépasser la capacité totale de mémorisation de la machine. Il s'agit là encore de l'un des problèmes techniques que la présente invention se propose de résoudre.

Une solution actuelle est d'allouer et de désallouer dynamiquement les tampons en cours d'utilisation par l'application. L'allocation mémoire vise principalement à réserver un espace mémoire de taille suffisante pour stocker un objet donné qui est manipulé dans un programme, puis à libérer ledit espace mémoire après son utilisation. Mais l'allocateur a également en charge de maintenir à jour des informations précisant quelles portions de la mémoire sont utilisées et quelles portions sont libres, ceci au prix d'une pénalité temporelle. L'art antérieur abonde de techniques visant à optimiser l'occupation de la mémoire tout en minimisant la pénalité temporelle. La plupart des techniques connues se fondent sur l'allocation de zones mémoires contiguës, selon trois types d'approche : « Sequential Fit », « Segregated Free Lists » et « Budy System ».

Les allocateurs du type « Sequential Fit » sont basés sur une liste linéaire de tous les blocs libres en mémoire. Ainsi, une phase d'allocation d'un objet de *nb* pages mémoires consiste à parcourir séquentiellement cette liste jusqu'à trouver un bloc mémoire libre de *nb* pages. Cet algorithme, de même que ses diverses optimisations, est très simple à mettre en oeuvre. Mais il est extrêmement pénalisant puisque potentiellement toute la liste peut devoir être parcourue, de manière séquentielle, avant de trouver une zone mémoire allouable. Il s'agit là d'un inconvénient majeur de l'approche « Sequential Fit ».

Afin d'accélérer l'allocation, les allocateurs du type « Segregated Free Lists » considèrent non plus une seule liste de tous les blocs libres en mémoire, mais plusieurs listes de blocs libres, chaque liste ne contenant que les blocs libres d'une certaine taille. Par exemple, une liste peut contenir les blocs libres de 10 à 20 pages, une autre les blocs libres de 20 à 40 pages, etc. Lors de la phase d'allocation, la recherche d'une zone libre ne se fait que dans la liste contenant les blocs de taille adaptée. Cette approche accélère grandement la recherche, mais elle nécessite d'entretenir de nombreuses listes. Il s'agit là d'un inconvénient majeur de l'approche « Segregated Free Lists ».

Afin d'accélérer encore l'allocation, les allocateurs du type « Budy System » considèrent des listes contenant des blocs libres dont la taille est une puissance de 2. Si un bloc n'a pas une taille exprimable comme une puissance de 2, sa taille est approximée à la puissance de 2 immédiatement supérieure. Cette restriction permet de découper virtuellement l'espace mémoire en deux ensembles de taille moitié. Chaque ensemble est à son tour décomposé en deux entités plus petites jusqu'à atteindre une taille limite. Cette approche diminue le nombre de listes, mais elle provoque une fragmentation importante de la mémoire. En effet, l'arrondi à la puissance de 2 supérieure entraîne une sous utilisation des blocs mémoires. Il s'agit là d'un inconvénient majeur de l'approche « Budy System ».

Cependant, qu'elles soient implémentées en logiciel ou qu'elles soient implémentées sur des opérateurs matériels spécifiques pour encore accélérer l'allocation, ces trois types de solutions d'allocation et de désallocation dynamique de la mémoire souffrent toujours de la contrainte de contiguïté des zones mémoires allouées. En effet, cette contrainte de contiguïté conduit dans tous les cas à une sous-utilisation de la mémoire, des requêtes d'allocations pouvant échouer non pas parce que l'espace mémoire disponible n'est pas suffisant, mais parce qu'il n'existe pas de zone contiguë de mémoire suffisamment large. Il s'agit là encore de l'un des problèmes techniques que la présente invention se propose de résoudre.

Diverses solutions logicielles permettent d'allouer et de désallouer dynamiquement des zones mémoires non contiguës. Par exemple, dans l'article "Page-Based Non-Contiguous Dynamic Memory Allocator" (J.Chen et al), un allocateur matériel utilise une structure de données de type « First In First-Out » (FIFO) pour stocker l'ensemble des pages mémoires libres. A chaque allocation, il tire une page hors de la structure FIFO. Lors d'une désallocation, il pousse la page libérée dans la structure FIFO. Cette solution simple permet une bonne réactivité. Mais elle nécessite une structure de données FIFO dont la taille est directement proportionnelle au nombre de pages mémoires dans le système. Elle peut donc avoir un coût silicium élevé. Par ailleurs, cette solution ne permet pas d'optimiser la répartition des pages dans l'espace mémoire afin de maximiser l'utilisation du parallélisme d'accès dans le cas où l'espace mémoire est réparti sur plusieurs bancs mémoires, plus couramment désigné « espace mémoire banqué ». Il s'agit là d'un inconvénient majeur. Autre exemple, dans l'article "SOCDMMU Dynamic Memory Management For Embedded Real-Time Multiprocessor System on a Chip" (M.Shahalan), un module appelé SOCDMMU utilise un tableau décrivant l'état de toutes les pages mémoires, qu'elles soient vides ou pleines. La recherche d'une page vide se fait par l'algorithme « First-fit », qui recherche la première page disponible dans le tableau, cette page étant ensuite allouée. La structure de données permettant de retrouver les pages libres est beaucoup moins volumineuse qu'une structure FIFO, mais la recherche de pages libres peut également être longue puisque, dans le pire des cas, tout le tableau d'état des mémoires peut avoir à être parcouru avant de repérer une page libre. Par ailleurs, cette solution ne permet par non plus d'optimiser la répartition des pages dans l'espace mémoire afin d'exploiter au mieux le parallélisme d'accès dans le cas de mémoires banquées. Il s'agit là encore de l'un des problèmes techniques que la présente invention se propose de résoudre. Une autre approche connue de EP 0 294 499 consiste à partager, entre plusieurs utilisateurs, une mémoire (buffer) constituée de plusieurs pages (segments), les pages étant elles-mêmes constituées de plusieurs « portions ». Les droits en écriture et en lecture peuvent être partagés entre plusieurs utilisateurs, sur les « portions » grâce à un ensemble de registres et de compteurs. Toutefois, cette solution porte sur une unique mémoire et ne permet pas des accès parallèles à plusieurs mémoires. Par ailleurs, elle ne permet pas de vérifier les accès concurrentiels à la mémoire, que ce soit en écriture ou en lecture.

Une solution de gestion d'accès aux pages d'une mémoire partagée répartie (MPR) est décrite dans l'article de JEGOU Yvon intitulé "Implementation of page management in mome,a user-level DSM", CLUSTER COMPUTING AND THE GRID, 2003. PROCEEDINGS. CCGRID 2003. 3RD IE EE/ACM INTERNATIONAL SYMPOSIUM ON 12-15 MAY 2003, PISCATAWAY, NJ, USA,IEEE, 12 mai 2003 (2003-05-12), pages 479-486, XP010639788 ISBN: 978-0-7695-1919-7) . Toutefois, cette solution est prévue pour gérer l'accès séquentiel aux pages du MPR et n'est pas adaptée pour gérer des accès parallèles à plusieurs mémoires (tampons), chacune constituée de plusieurs pages.

Par ailleurs, la gestion de tampons de données manipulés simultanément par une tâche productrice et une ou plusieurs tâches consommatrices n'est pas optimisée dans les systèmes actuels. De manière à garantir le respect des dépendances de type « *read-after-write »* ou « *write-after-read* », les systèmes actuels supposent grossièrement que les tâches productrices et consommatrices des données sont explicitement synchronisées. Ainsi, une page n'est libérée que lorsqu'elle a été entièrement consommée. Il s'agit là encore de l'un des problèmes techniques que la présente invention se propose de résoudre.

L'invention a notamment pour but de pallier les inconvénients précités, en proposant une solution innovante de gestion dynamique d'un espace mémoire réparti sur plusieurs éléments de mémoire. En étalant les tampons sur l'ensemble des éléments de mémoire, elle est plus particulièrement efficace lorsque ces éléments sont accessibles en parallèle. A cet effet, l'invention a notamment pour objet un dispositif pour gérer des tampons de données dans un espace mémoire réparti sur une pluralité d'éléments de mémoire. L'espace mémoire est allouable par pages mémoires, chaque tampon comportant une ou plusieurs pages mémoires. Les tampons sont utilisables par au moins une unité de traitement pour l'exécution d'une application, l'application étant exécutée par une pluralité d'unités de traitement (3) exécutant des tâches en parallèle, les éléments de mémoire étant accessibles en parallèle par les unités de traitement. Le dispositif comporte des moyens pour allouer des tampons aux tâches pendant l'exécution de l'application et des moyens de gestion de droits d'accès aux tampons. Avantageusement, les moyens pour allouer des tampons sont propres à allouer des tampons aux tâches en fonction de l'état de remplissage des tampons, et les moyens de gestion des droits d'accès aux tampons incluent des moyens de gestion de droits d'accès aux pages dans un tampon donné vérifiant qu'une écriture dans une page donnée ne modifie pas des données en cours de lecture dans ladite page ou qu'une lecture dans une page donnée n'accède pas des données en cours d'écriture dans ladite page, de manière à partager ledit tampon entre des tâches non synchronisées.

Avantageusement, les moyens pour allouer des tampons peuvent allouer les tampons de manière à minimiser le nombre maximum de tampons alloués à un même élément de mémoire.

Dans un mode de réalisation préférentiel, les moyens pour allouer des tampons peuvent inclure des registres d'état de remplissage des pages mémoires, un bit donné dans un registre donné caractérisant l'état vide ou l'état non-vide d'une page mémoire donnée. Les moyens pour allouer des tampons peuvent également inclure des registres d'état de remplissage des éléments de mémoire, un bit donné dans un registre donné caractérisant l'état vide ou l'état non-vide d'un élément de mémoire donné, ainsi que des registres d'état de creux des éléments de mémoire, un bit donné dans un registre donné caractérisant l'état partiellement plein ou l'état non partiellement plein d'un élément de mémoire donné. Les moyens pour allouer des tampons peuvent alors inclure des moyens pour réaliser des opérations logiques de type ET sur les registres d'état de remplissage des pages mémoires, de manière à accélérer la mise à jour des registres d'état de remplissage des éléments de mémoires, ainsi que des opérations logiques de type OU exclusif sur les registres d'état de remplissage des pages mémoires, de manière à accélérer la mise à jour des registres d'état de creux des éléments de mémoires. Les moyens pour allouer des tampons peuvent inclure un encodeur de priorité permettant de déterminer en un seul cycle le premier bit à 1 dans les registres d'état de remplissage et de creux des éléments de mémoires.

Par exemple, le dispositif peut comporter des moyens pour désallouer des tampons pendant l'exécution de l'application, les adresses physiques des données contenues dans un tampon étant variables si ledit tampon est désalloué puis ré-alloué au cours de l'exécution de l'application. L'unité de traitement peut alors utiliser des adresses virtuelles invariables pour exécuter l'application et le dispositif peut comporter des moyens pour traduire les adresses virtuelles en adresses physiques. Les moyens pour traduire les adresses virtuelles en adresses physiques peuvent inclure au moins une structure pour stocker des correspondances entre des adresses virtuelles et des adresses physiques. Les correspondances entre les adresses virtuelles et les adresses physiques des données contenues dans un tampon donné peuvent être stockées dans une ou plusieurs structures dédiées audit tampon. Les moyens pour traduire les adresses virtuelles en adresses physiques peuvent aussi inclure des copies des structures de stockage dans chaque unité de traitement.

Avantageusement, les moyens de gestion de droits d'accès aux tampons peuvent inclure des moyens pour vérifier qu'une tâche donnée est autorisée à écrire des données dans un tampon donné. Ils peuvent également inclure des moyens pour vérifier que le nombre de tâches lisant dans un tampon donné n'excède pas un seuil prédéfini. Ils peuvent également inclure des moyens pour retirer à une tâche le droit d'écrire dans un tampon et autoriser une autre tâche à écrire dans ledit tampon.

Avantageusement, les moyens pour allouer des tampons peuvent inclure des moyens pour vérifier que l'espace mémoire disponible est suffisant pour allouer un tampon donné. Les moyens pour allouer des tampons et les moyens de gestion des droits d'accès aux pages peuvent permettre, en une seule requête d'allocation, d'allouer à une tâche donnée plusieurs pages dans un tampon donné.

L'invention a encore pour principaux avantages qu'elle permet une occupation totale de l'espace mémoire, qu'elle a un impact temporel négligeable sur les performances globales du système et qu'elle peut être implémentée à coût silicium et énergétique minimum.

D'autres caractéristiques et avantages de l'invention apparaîtront à l'aide de la description qui suit faite en regard de dessins annexés qui représentent :
- la figure 1, par un diagramme fonctionnel, un exemple d'architecture selon l'invention ;
- la figure 2, par un diagramme structurel, un exemple de format d'adresses virtuelles selon l'invention ;
- la figure 3, par un diagramme structurel, un exemple de requête de réservation d'espace mémoire selon l'invention ;
- la figure 4, par un diagramme structurel, un exemple de requête de placement de données selon l'invention ;
- la figure 5, par un diagramme structurel, un exemple de requête de libération de tampon selon l'invention ;
- la figure 6, par un diagramme structurel, un exemple de requête d'acquisition de table de traduction selon l'invention ;
- la figure 7, par un diagramme structurel, un exemple de requête de disponibilité de données selon l'invention ;
- la figure 8, par un diagramme structurel, un exemple de requête de mise en disposition de données selon l'invention ;
- la figure 9, par un diagramme structurel, un exemple de requête de libération de page selon l'invention ;
- la figure 10, par un diagramme structurel, un exemple de requête de changement de propriétaire de tampon selon l'invention ;
- la figure 11, par un diagramme d'activité, un exemple de fonctionnement d'un gestionnaire de mémoire selon l'invention pour traiter une requête de placement de tampons de données ;
- la figure 12, par un diagramme structurel, un exemple de zones de mémoire permettant la mise en oeuvre de l'invention ;
- la figure 13, par un diagramme d'activité, un exemple de fonctionnement du gestionnaire de mémoire selon l'invention pour traiter une requête de libération de tampons de données ;
- la figure 14, par un diagramme d'activité, un exemple de fonctionnement du gestionnaire de mémoire selon l'invention pour traiter une requête de changement de propriétaire d'un tampon de données ;
- la figure 15, par un diagramme de structure, un exemple d'unité de traduction selon l'invention ;
- la figure 16, par un diagramme d'activité, un exemple de fonctionnement du gestionnaire de mémoire selon l'invention pour traiter une requête de transfert de table de traduction ;
- la figure 17, par un diagramme d'activité, un exemple de fonctionnement du gestionnaire de mémoire selon l'invention pour traiter une requête de demande de disponibilité ;
- la figure 18, par un diagramme d'activité, un exemple de fonctionnement du gestionnaire de mémoire selon l'invention pour traiter une requête de mise à disposition de pages ;
- la figure 19, par un diagramme d'activité, un exemple de fonctionnement du gestionnaire de mémoire selon l'invention pour traiter une requête de libération de page.

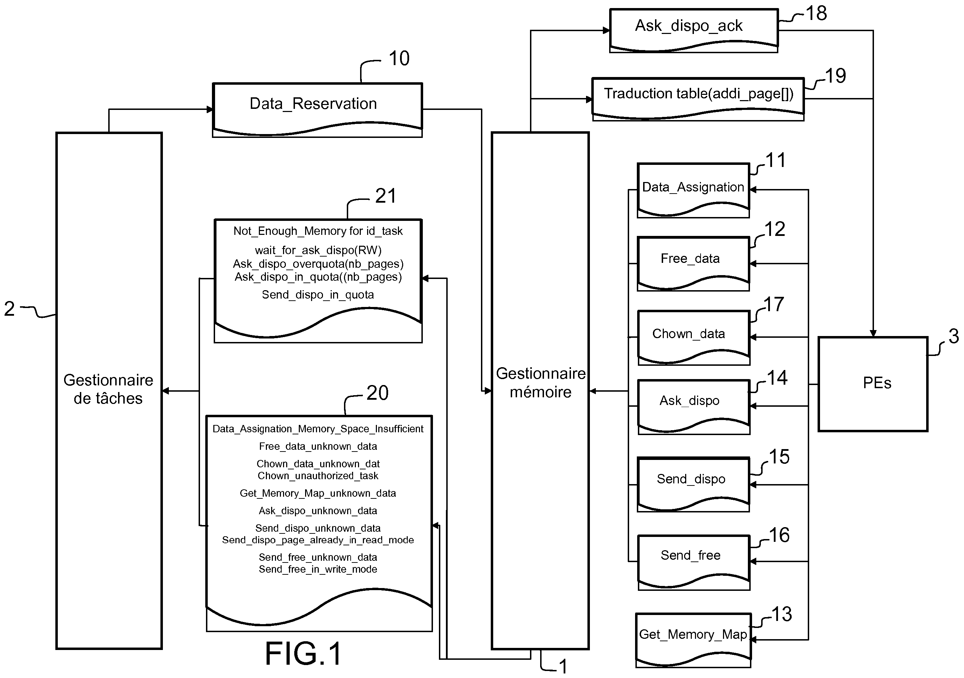

La figure 1 illustre par un diagramme fonctionnel un exemple d'échanges possibles entre un gestionnaire de mémoire 1 selon l'invention, un gestionnaire de tâches 2 et un groupement 3 d'unités de traitement. Dans le présent exemple de réalisation, le gestionnaire de tâches 2 est une entité spécifique. Il est toutefois envisageable que celui-ci soit mis en oeuvre par du logiciel système s'exécutant sur les unités de traitement 3. Le gestionnaire de tâches 2 alloue les tâches aux unités de traitement 3, avec une grande capacité de migration d'une unité de traitement vers une autre. Dans le présent exemple de réalisation, le gestionnaire de mémoire 1 est en charge d'allouer et de désallouer des tampons de données dans un « cluster » de mémoires selon l'expression anglo-saxonne, le cluster comportant 32 bancs mémoire, chaque banc contenant 32 pages mémoires, chaque page contenant 64 mots et chaque mot comportant 4 octets. Il faut bien comprendre que toutes les valeurs numériques mentionnées dans la description qui suit ne correspondent qu'aux exemples de réalisation présentés et que ces valeurs ne sont nullement limitatives. Dans la suite de la description et pour des raisons de clarté, les bancs mémoire pourront parfois être indifféremment désignés par « les ressources mémoire » ou simplement « les mémoires ». Les unités de traitement formant le groupement 3, qui peuvent être des processeurs par exemple, peuvent utiliser le cluster de mémoires pour exécuter en parallèle des applications, les unités de traitement pouvant avantageusement accéder en parallèle aux bancs mémoire. Ainsi, le gestionnaire de mémoire 1 traite à minima des requêtes de type *Data_Assignation, Free_data, Get_Memory_Map, Ask_dispo, Send_dispo, Send_free,* ainsi que, préférentiellement des requêtes de type *Data_Reservation* et *Chown_data.* Le contenu de ces requêtes est détaillé par la suite. Dans le présent exemple de réalisation, le gestionnaire de tâches 2 envoie des requêtes 10 de type *Data_Reservation* au gestionnaire de mémoire 1, alors que les unités de traitement 3 envoient au gestionnaire de mémoire 1 des requêtes 11, 12, 13, 14, 15, 16 et 17 de types respectifs *Data_Assignation, Free_data, Get_Memory_Map, Ask_dispo, Send_dispo, Send_free* et *Chown_data.*

Dans la description qui suit, les applications sont modélisables sous la forme de graphes de tâches qui communiquent par l'intermédiaire de tampons de données, une seule tâche productrice pouvant écrire dans un tampon donné, alors que plusieurs tâches consommatrices peuvent potentiellement le lire.

Il faut comprendre que le placement dynamique des tampons en mémoire n'est qu'une fonctionnalité de base parmi d'autres fonctionnalités fournies par le gestionnaire de mémoire 1. Par exemple, une deuxième fonctionnalité assurée par le gestionnaire de mémoire 1 peut être la traduction d'adresses virtuelles manipulées dans les tâches en adresses physiques. En effet, pour allouer/désallouer dynamiquement des tampons de données sur des mémoires disponibles de manière transparente aux tâches, un adressage virtuel des tampons est préférable. Ainsi, les adresses physiques des tampons en mémoire peuvent changer au gré des allocations/désallocations sans que leur adresse virtuelle manipulée par les tâches ne change. Avantageusement, une troisième fonctionnalité de gestion des droits d'accès aux données peut assurer le respect des dépendances de données, notamment dans le contexte des applications flots de donnée où le producteur et un ou plusieurs des consommateurs d'un tampon sont simultanément actifs sur un espace de mémoire physiquement distribué. Par exemple, il peut s'agir d'assurer qu'une donnée ne peut être lue qu'après avoir été produite. Il faut noter que de manière générale, la gestion de tampons de données manipulés simultanément par une tâche productrice et une ou plusieurs tâches consommatrices n'est pas optimisée dans les systèmes actuels, qui supposent que les tâches productrices et consommatrices des données sont explicitement synchronisées, de manière à garantir le respect des dépendances de type « *read-after-write »* et pour libérer automatiquement une page dès lors qu'elle a été entièrement consommée.

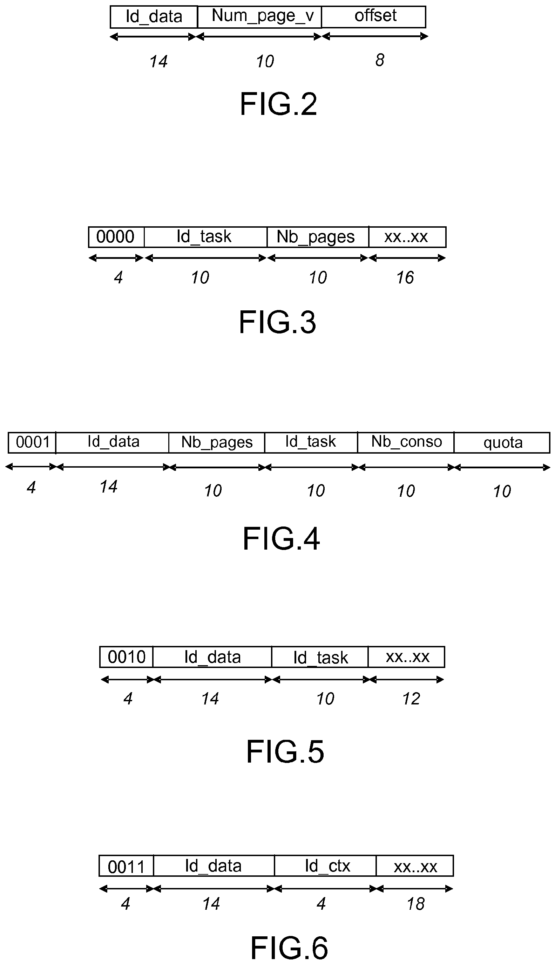

La figure 2 illustre par un diagramme structurel un exemple de format d'adresses virtuelles selon l'invention. Il sera considéré par la suite que les tâches de traitements manipulent des données virtuellement adressées suivant le format décrit sur la figure 2. Dans le présent exemple de réalisation, un champ *id_data* de 14 bits permet d'identifier le tampon manipulé, ce qui permet d'adresser 16384 tampons. Un champ *Num_page_v* de 10 bits permet de préciser la page manipulée dans le tampon, ce qui autorise un seul tampon à occuper la totalité des 2¹⁸ octets de l'espace mémoire. Un champ *offset* de 8 bits permet de se déplacer, octet par octet, dans la page.

Le gestionnaire de mémoire 1 est en charge du placement dynamique de tampons de tailles variables sur les ressources de mémorisation du système. Dans l'espace mémoire virtuel manipulé par les tâches de traitement, les tampons sont vus comme des zones mémoires contiguës. Afin d'occuper au mieux l'espace mémoire disponible, le placement de données ne suppose quant à lui aucune contrainte de contiguïté et permet la fragmentation de l'espace mémoire physiquement attribué au tampon. La taille de l'espace mémoire physiquement attribué au tampon est spécifiée au gestionnaire de mémoire 1 sous la forme d'un nombre de pages. Dans le présent exemple, les tailles de tampons sont donc multiples de 64 X 4 = 256 octets, ce qui autorise un partage optimisé de l'espace mémoire.

La figure 3 illustre par un diagramme structurel un exemple de requête 10 de type *Data_reservation* selon l'invention, permettant la réservation d'espace mémoire. En effet, avant de placer un tampon en mémoire, un espace suffisant doit avoir été réservé. Une requête *Data_reservation* est à l'initiative du gestionnaire de tâches 2. A la réception de cette requête, dans cet exemple de réalisation, le gestionnaire de mémoire 1 la reconnaît grâce à son identifiant de type de requête *0000* sur les 4 premiers bits. Puis, le gestionnaire de mémoire 1 vérifie qu'il y a suffisamment de mémoire pour l'ensemble des tampons créés par une tâche *id_task.* Si tel est le cas, *nb_pages* pages mémoires sont réservées. Elles sont physiquement attribuées aux différents tampons associés à la tâche *id_task* lors des requêtes de placement de données. Si la requête échoue faute d'un nombre suffisant de pages, l'émetteur de la requête en est informé afin de prendre les mesures adéquates en fonction du contexte, comme par exemple la suspension de tâche ou la réduction de qualité de service. Si cette fonction de réservation n'existe pas, une tâche peut se trouver bloquée en attente d'espace mémoires pour stocker ces tampons. Les 16 derniers bits marqués x sont inutilisés. Dans les figures 4 à 10 qui suivent et qui représentent des requêtes, les 4 premiers bits permettent d'identifier le type de requête et les derniers bits marqués *x* sont inutilisés.

La figure 4 illustre par un diagramme structurel un exemple de requête 11 de type *Data_Assignation* selon l'invention, permettant le placement de données. Le placement d'un tampon en mémoire est réalisé par exemple lors de l'initialisation d'une tâche. Ce placement permet, pour chacune des pages virtuelles d'un tampon, de rechercher une page mémoire libre dans l'espace mémoire physique et de la lui attribuer. Par la suite, il sera discuté des optimisations applicables pour accélérer cette fonction. Les requêtes de placement *Data_Assignation* sont envoyées préférentiellement par l'unité de traitement exécutant la tâche pendant la phase d'initialisation de celle-ci, ou pour le moins avant de manipuler le tampon. Elles prennent par exemple la forme illustrée sur la figure 4. Les 4 premiers bits *0001* de cette requête permettent d'identifier son type. Les 14 bits suivants contiennent l'identifiant *id_data* du tampon. Les 10 bits suivants contiennent la taille du tampon *nb_pages* exprimée en nombre de pages. En plus de la recherche et de l'affectation de pages mémoires libres au tampon, le gestionnaire de mémoire 1 mémorise des informations relatives au tampon telles que le nombre de consommateurs ou l'identifiant du propriétaire, qui seront exploitées par la suite lors de phases de traduction d'adresse et de vérification de droits d'accès. Ainsi, les 10 bits suivants contiennent l'identifiant *id_task* de la tâche propriétaire du tampon, c'est-à-dire la tâche autorisée à écrire sur le tampon. Les 10 bits suivants contiennent le nombre de consommateur du tampon *nb_conso.* Les 10 bits suivants indiquent le taux de remplissage *quota* à partir duquel le gestionnaire de mémoire 1 signale l'état de remplissage du tampon au gestionnaire de tâches 2. En plus de la recherche et de l'affectation de pages mémoires libres au tampon, le gestionnaire de mémoire 1 mémorise les informations relatives au tampon, tel que le nombre de consommateurs ou l'identifiant du propriétaire, qui seront exploitées par la suite lors des phases de traduction d'adresse et de vérification de droits d'accès.

La figure 5 illustre par un diagramme structurel un exemple de requête 12 de type *Free_data* selon l'invention, permettant de libérer un tampon. La gestion dynamique de l'espace mémoire n'ayant de sens que si des tampons ne sont pas utilisés tout au long de l'exécution de l'application, il est par ailleurs préférable de libérer des tampons dès que possible. Cette libération permet de retrouver toutes les pages mémoires associées à un tampon et de libérer chacune d'entre elle. Ces libérations de tampons sont réalisées lorsque chacun des *nb_conso* consommateurs potentiels d'un tampon a déclaré avoir terminé d'utiliser ledit tampon. Ceci se fait par l'intermédiaire de requêtes *Free_data* respectant par exemple le format de la figure 5, d'identifiant de type de requête *0010,* et permettant d'identifier le tampon *id_data* dont la tâche *id_task* a terminé l'exploitation.

La fonctionnalité de traduction convertit des adresses virtuelles ayant par exemple le format représenté sur la figure 2 en adresses physiques pouvant être envoyées à la mémoire. Ces traductions sont systématiquement et automatiquement réalisées lors d'une lecture ou d'une écriture en mémoire. Avantageusement, il peut s'agir de rechercher dans des structures de stockage adaptées l'adresse physique correspondant à l'adresse virtuelle manipulée. L'ensemble des unités de traitement travaillant en parallèle et accédant avec un débit élevé à des données partagées, il est alors préférable de distribuer cette fonctionnalité de traduction au niveau de chacune des unités de traitement afin d'éviter les conflits d'accès aux structures de stockage. Dans le présent exemple de réalisation, chaque unité de traitement dispose d'une unité locale de traduction disposant de tables de traduction, ces tables étant avantageusement des structures de stockage de type tableau associatif. Ainsi, à une donnée manipulée dans une tâche, une unité de traduction peut associer d'abord une table de traduction. Puis, grâce à cette table de traduction, l'unité de traduction peut assurer la correspondance entre une page virtuelle et son adresse physique. Avantageusement, compte tenu des capacités de migration de tâche et du fait qu'un tampon peut avoir plusieurs consommateurs, les tables de traduction utilisées ne peuvent être que des copies de tables de traduction entretenues et mises à disposition par le gestionnaire de mémoire 1.

La figure 6 illustre par un diagramme structurel un exemple de requête 13 de type *Get_Memory_Map* selon l'invention, permettant l'acquisition d'une table de traduction. En effet, pour chacune des données manipulées dans la tâche, l'unité de traitement rapatrie l'ensemble des traductions de page. Les requêtes *Get_Memory_Map* contiennent sur 14 bits l'identifiant du tampon *id_data* dont la table de traduction est souhaitée. Pour des raisons d'optimisation discutées par la suite, les tables de traduction peuvent avantageusement être découpées en plusieurs tables de taille réduite, chacune associée à un numéro de contexte. Dans le présent exemple, des tables pouvant contenir jusqu'à 1024 traductions sont découpées en 16 contextes de 64 traductions. Un champ *id_ctx* sur 18 bits permet d'identifier le numéro de contexte. Le gestionnaire de mémoire 1 renvoie à l'unité de traitement la table de traduction demandée par un message 19 de type *Translation_table.*

La fonctionnalité de gestion des droits d'accès aux données peut par exemple permettre d'une part de vérifier la légalité des manipulations des tampons de données dans leur ensemble et d'autre part de vérifier la validité des accès aux pages de données. Dans le premier cas, il s'agit alors de vérifier qu'une tâche est bien autorisée à écrire des données dans un tampon ou éventuellement que le nombre de tâches consommant un tampon n'excède pas une quantité définie hors-ligne. La vérification de la validité des accès aux pages de données permet quant à elle de garantir l'intégrité des données, en vérifiant qu'une lecture n'intervient pas sur une page en cours d'écriture ou qu'une écriture ne vient pas modifier une page en cours de lecture. Ces vérifications des droits d'accès peuvent être réalisées grâce à des requêtes explicites adressées par les unités de traitement au gestionnaire de mémoire 1. Ces requêtes sont envoyées avant chaque manipulation d'une nouvelle page. Ainsi, avant de manipuler les données d'une page *id_page* du tampon *id_data,* que ce soit en lecture ou en écriture, l'unité de traitement exécutant la tâche *id_task* envoie une requête *Ask_dispo* au gestionnaire de mémoire 1 afin d'en vérifier sa disponibilité. Pour une requête de disponibilité en lecture, il s'agit de vérifier que la donnée a déjà été produite et qu'elle n'est plus modifiée. Pour une requête en écriture, il s'agit de vérifier que la page ne sera plus lue. Ainsi, il est possible de partager des tampons entre des tâches non synchronisées.

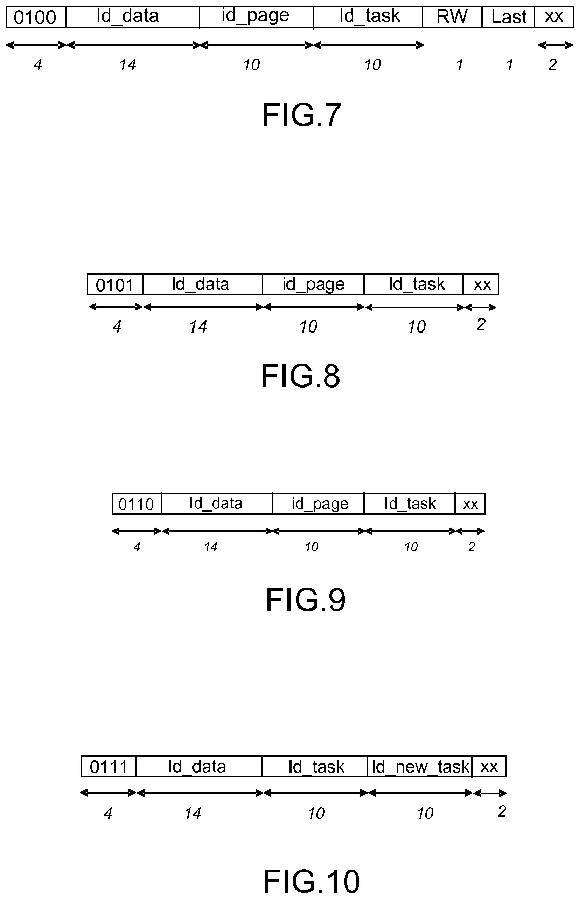

La figure 7 illustre par un diagramme structurel un exemple de requête 14 de type *Ask_dispo* selon l'invention, permettant de demander la disponibilité de données. En plus des champs *Id_data, id_page* et *Id_task* déjà décrits précédemment, un bit *RW* indique si la requête est une demande de disponibilité en lecture ou en écriture. Le dernier bit *Last peut* permettre, à des fins d'optimisation, d'indiquer si une requête est la dernière d'une série de requêtes de disponibilité. Ces requêtes peuvent être explicites dans le code de la tâche. Toutefois, si l'impact en performance est notable, il peut être envisagé de les générer automatiquement suite à des accès invalides aux tables de traduction. Le gestionnaire de mémoire 1 répond à l'unité de traitement par un accusé de réception 18 de type *Ask_dispo_ack.*

La figure 8 illustre par un diagramme structurel un exemple de requête 15 de type *Send_dispo* selon l'invention, permettant la mise à disposition de données. Suite à la phase de placement, toutes les pages d'un tampon mémoire sont automatiquement initialisées avec des droits d'accès en écriture pour la tâche propriétaire du tampon. Durant la phase d'exécution, les évolutions des droits d'accès à ces pages sont en revanche gérées explicitement pour rendre une page accessible en lecture ou en écriture. Les requêtes *Send_dispo* sont envoyées par l'unité de traitement exécutant la tâche *id_task* pour signaler que celle-ci ne modifiera plus les données de la page *id_page* du tampon *id_data.* Le gestionnaire de mémoire 1 donne alors les droits d'accès en lecture aux *nb_conso* lecteurs du tampon *id_data* et l'unité de traduction de l'unité de traitement émettrice de la requête invalide la ligne de traduction associée à cette page.

La figure 9 illustre par un diagramme structurel un exemple de requête 16 de type *Send_free* selon l'invention, permettant de libérer une page. Les requêtes *Send_free* sont envoyées par l'unité de traitement exécutant la tâche *id_task* pour signaler que celle-ci n'accédera plus à la page *id_page* du tampon *id_data.* Le nombre de consommateur *nb_conso* de la page est alors décrémenté. Lorsque celui-ci atteint 0, il n'existe plus de consommateur potentiel de cette page et le gestionnaire de mémoire 1 la rend à nouveau disponible pour une écriture.

La figure 10 illustre par un diagramme structurel un exemple de requête 17 de type *Chown_data* selon l'invention, permettant de changer la tâche propriétaire d'un tampon. Dans les cas où les tâches de consommation ne modifient que de très faibles quantités de données dans de larges ensembles, par exemple quelques pixels dans une image, les modèles d'exécution basique de l'art antérieur provoquent souvent la recopie complète de l'ensemble des données dans un nouveau tampon. Pour minimiser les temps de recopie, il est envisageable de réutiliser le tampon de départ pour ne réécrire que les données modifiées. Dans ce cas, la tâche consommatrice ne crée pas de nouveaux tampons mais la tâche productrice lui donne des droits d'accès en écriture lorsqu'elle se termine par le biais de requêtes *Chown_data,* qui précise le propriétaire initial *id_task* du tampon *id_data* et le nouveau propriétaire de ce tampon *id_new_task* sur 10 bits. Il est à noter que ce type de mécanisme est susceptible de conduire à des blocages s'il n'est pas utilisé précautionneusement. Il convient de ne l'utiliser que localement, lorsque l'environnement de génération de code garantit l'absence de cas problématiques.

La figure 1 illustre également les informations renvoyées vers le gestionnaire de tâches 2 afin qu'il optimise son allocation. Par exemple, deux blocs 20 et 21 regroupent des messages d'erreurs renvoyés vers le gestionnaire de tâches 2. Certains messages peuvent être exploités par le gestionnaire de tâches 2 de manière à limiter les attentes au niveau des unités de traitement 3. Les informations les plus utiles sont les attentes faisant suites aux requêtes *Ask_dispo* ou encore les quotas de remplissage des tampons. Mais les erreurs potentielles sont très nombreuses, comme par exemple des accès illégaux, des attentes anormalement longues, des dépassements de capacités mémoires ou encore des tentatives d'accès à des tampons non identifiés.

Le gestionnaire de mémoire 1 est au coeur des activités de transferts de données dans le cluster de mémoires. Par conséquent, ses performances ont un impact de premier ordre sur les performances globales du système. L'architecture du gestionnaire de mémoire 1 est en conséquence définie de manière à optimiser ses temps de traitement. En particulier, les activités fréquentes telles que la gestion des droits d'accès aux pages de données sont préférentiellement traitées de manière à autoriser une réactivité de l'ordre du cycle. Bien que moins critiques sur les performances globales du système, les opérations d'allocation sont également optimisées de sorte que le traitement de celles-ci ne conduise pas à augmenter significativement le temps d'initialisation des tâches sur les unités de traitement (de l'ordre de quelques centaines de cycles).

Le placement dynamique des données en mémoire selon l'invention permet par ailleurs d'exploiter totalement l'espace mémoire du cluster. Pour cela, le gestionnaire de mémoire 1 est capable de fragmenter les données de manière totalement transparente pour les tâches de calcul. Le temps d'accès aux mémoires étant par ailleurs dépendant du nombre d'unités de traitement dans le groupement 3 accédant simultanément à une mémoire, l'allocation minimise les risques d'accès parallèle aux mémoires, en minimisant le nombre de tampons se partageant une mémoire. Ainsi, le nombre d'accès concurrents aux mémoires ne dépasse généralement pas le parallélisme maximum des accès aux données induit par l'application (nombre de consommateurs d'un tampon).

Malgré les contraintes de performances associées au gestionnaire de mémoire 1, il est important de maîtriser la complexité et le coût silicium de ce module. L'architecture du gestionnaire de mémoire 1 est donc définie de manière à minimiser le volume de données manipulées et à favoriser l'utilisation de composants mémoires standards.

Le module de gestion de tampons, coeur du gestionnaire de mémoire 1, place dynamiquement des tampons de données dans les ressources mémoires disponibles. Bien que la littérature soit riche en matière de solution de gestion dynamique de la mémoire, l'invention se place dans un contexte original qui ne souffre pas de la contrainte de contiguïté des données. En effet, l'ensemble des solutions décrites dans la littérature tentent de placer des ensembles de données dans des espaces mémoire contigus de tailles suffisamment importantes. L'objectif du module de placement inclut donc dans le cas général de trouver le bon compromis entre les performances de l'allocation et l'occupation mémoire. Dans le contexte de l'invention, un tampon de donnée peut aisément être fractionné pour être réparti sur plusieurs zones mémoires discontinues. Ceci permet donc de garantir une utilisation complète de l'espace mémoire.

De manière classique, le placement d'un tampon de *nb_page* en mémoire comporte la répétition de *nb_page* fois une opération de recherche d'une page libre en mémoire, puis l'affectation de cette page libre au tampon de donnée. Cette opération se base sur une liste de page libre ou sur un registre d'état des pages de l'espace mémoire. Dans le premier cas, une liste doublement chaînée permet de retrouver rapidement, pour chaque opération, la première page disponible au prix d'une quantité élevée de mémoire. Dans le cas d'un registre d'état, la quantité mémoire est minimale mais l'opération de recherche de pages libre peut être longue s'il n'existe pas d'opérateur d'accélération de recherche de page libre (encodeur de priorité). Dans les deux cas, le temps de placement est proportionnel au nombre de pages à placer et les pages permettant le stockage des tampons sont réparties sur les différents bancs du cluster.

La fragmentation des données en mémoire ainsi engendrée risque toutefois de conduire au partage des mémoires entre plusieurs tampons de données. Dès lors, il devient délicat de prédire le temps d'accès à un tampon puisque celui-ci n'est plus dimensionné par le nombre de consommateur/producteur d'un tampon (donnée applicative). Le temps d'accès à une donnée devient désormais dépendant du nombre de lecteur/écrivain à la mémoire qui la stocke et ne peut donc plus être précisément connu au moment de l'exécution. La stratégie d'allocation mise en place vise donc à retarder la fragmentation de la mémoire en maximisant le nombre de mémoires ne stockant qu'un seul tampon de données. De manière préférentielle, les données seront par ailleurs allouées par bloc en plaçant simultanément plusieurs pages en mémoire, de manière à accélérer cette étape de placement.

Pour privilégier l'unicité des tampons dans les mémoires, la stratégie retenue est notamment d'accepter qu'une partie des bancs du cluster soit partagée entre plusieurs tampons de données. Lorsqu'un tampon ne permet pas de réserver une mémoire complète, celui-ci sera ainsi prioritairement placé sur ces mémoires, de manière à ne pas augmenter la quantité de mémoire accueillant plusieurs tampons. Ce sacrifice de certaines mémoires permet ainsi de ne pas multiplier le nombre de mémoires associées à plusieurs tampons et ainsi de prévenir la fragmentation progressive de l'espace mémoire. Cette stratégie se traduit par l'algorithme de placement de tampon mémoire, prenant en paramètres l'identifiant de tampon *id_data* et le nombre de pages du tampon *nb_pages* comme indiqué en annexe.

L'algorithme qui précède est une version simplifiée, ne faisant pas de tests pour vérifier si le tampon est valide ou si le placement se déroule correctement. Dans un premier temps, les *nb_pages* de données du tampon *id_data* sont réparties en *NbM +1* ensembles de pages, où *NbM* correspond au nombre de mémoires pouvant être entièrement remplies par une partie du tampon. *Nbp* est le nombre de pages restant dans le *NbM+1^{ème}* ensemble, insuffisant pour remplir à lui seul une mémoire. Ensuite, pour chaque ensemble de 32 pages (taille d'une mémoire dans notre exemple), l'algorithme recherche une mémoire vide et affecte, en cas de succès, chacune des pages de la mémoire au tampon, par l'intermédiaire d'une fonction *Assign_Page.* Si aucune mémoire entièrement libre n'est disponible, chaque page de l'ensemble est placé séparément dans un page libre d'une mémoire non entièrement pleine. Les *Nbp* pages ne permettant pas de remplir complètement une mémoire sont à l'inverses mappées privilégiement sur des mémoires partiellement remplies (ou non complètement pleines). S'il n'existe plus de mémoire partiellement pleine, une mémoire vide sera utilisée.

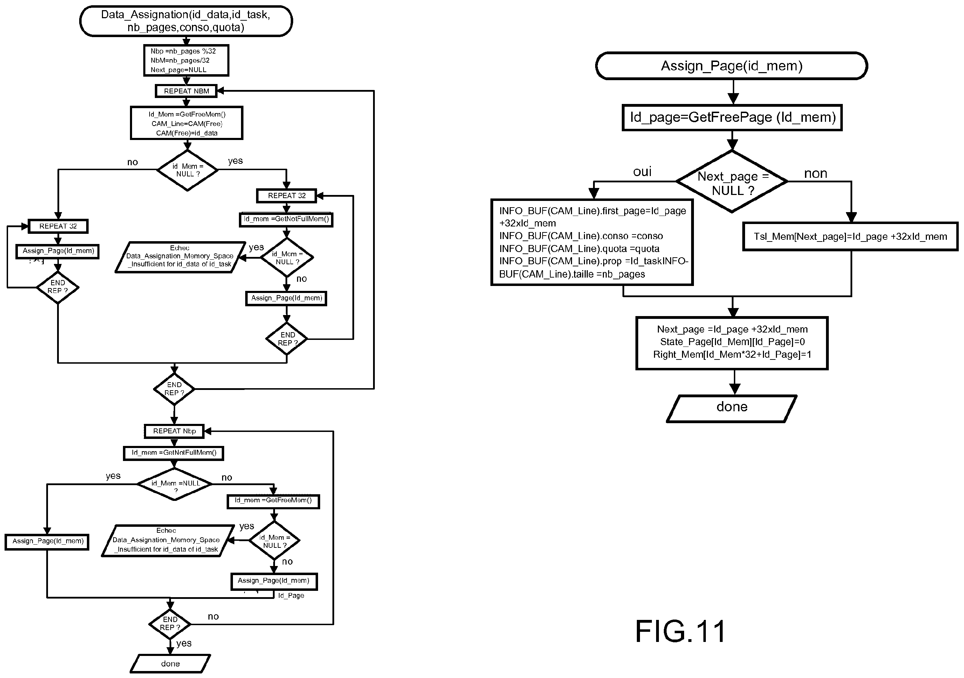

La figure 11 illustre par un diagramme d'activité un exemple de fonctionnement du gestionnaire de mémoire 1 selon l'invention, pour traiter une requête *Data_Assignation* de placement de tampons de données. Avantageusement, dans le présent exemple, pour chacun des 32 bancs mémoire, un registre 32 bits peut caractériser l'état de remplissage de chacune des 32 pages qu'il contient, un bit valant '1' pour vide et '0' sinon. Avantageusement là encore, un registre 32 bits peut caractériser l'état de remplissage de chacun des 32 bancs de mémoire, un bit valant '1' pour vide et '0' sinon. Avantageusement là encore, un registre 32 bits peut caractériser l'état de creux de chacun des 32 bancs de mémoire, un bit valant '1' pour partiellement plein et '0'. Ainsi, 34 registres de 32 bits sont utilisés au total dans le présent exemple de réalisation. Les informations contenues dans les registres d'état de remplissage et de creux des bancs peuvent avantageusement être automatiquement mises à jour grâce à des fonctions AND et XOR respectivement, à partir des contenus des registres d'états des pages. La recherche des mémoires vides ou partiellement pleines peut alors se faire par l'intermédiaire d'un encodeur de priorité 32 bits, capable en un cycle de déterminer le premier bit à 1 dans les registres d'état des bancs.

Outre ces informations, le gestionnaire de mémoire 1 manipule également une mémoire appelée *INFO_buf,* stockant l'ensemble des informations associées à un tampon : son propriétaire, le nombre de ses consommateurs et éventuellement le nombre de pages à partir duquel le gestionnaire de mémoire 1 doit signaler au gestionnaire de tâches 2 l'état du tampon. Cette mémoire est adressée grâce à l'identifiant de tampon *id_data* et est associée à une mémoire associative *CAM_buf* de type CAM selon l'acronyme anglo-saxon signifiant « Content-Adressable Memory », *CAM_buf* faisant le lien entre l'identifiant du tampon et l'adresse de stockage des informations qui lui sont associées dans *INFO_buf.* Une mémoire *Shared_Tsl_Mem* est également utilisée afin de stocker les informations utiles aux traductions des adresses virtuelles en adresses physiques, sous la forme d'une liste chaînée et ordonnée suivant les numéros de pages virtuelles.

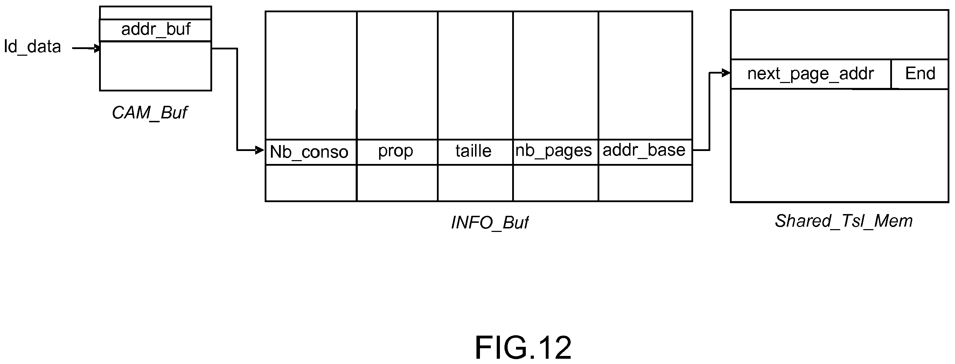

La figure 12 illustre par un diagramme structurel un exemple de zones de mémoire permettant la mise en oeuvre de l'invention. L'adresse de début de la liste de traduction est une information associée au tampon de donnée et stockée dans la mémoire *INFO_buf,* comme illustré sur la figure 12. Il est à noter que plusieurs points d'entrée dans cette liste de traduction peuvent être précisés dans *INFO_buf* si la liste de traductions associée à une donnée est découpée en plusieurs contextes. Finalement une dernière mémoire *Right_Mem* est manipulée, afin d'initialiser les droits d'accès aux pages de données, avec des droits d'accès en écriture.

Il est à noter que des erreurs sont signalées au gestionnaire de tâches 2 si une demande de placement échoue, c'est-à-dire s'il n'existe plus de pages libres alors que la requête de placement n'a pas été acquittée. Ce cas risque principalement d'arriver si une requête de réservation mémoire n'a pas précédé une requête de placement de tampon. Il serait possible de vérifier plus tôt qu'un espace mémoire suffisant a été réservé pour la tâche *id_task* pour stocker le tampon. Ceci suppose qu'une liste des tâches en attente de requête de placement de données soit maintenue à jour par le gestionnaire de mémoire 1.

La réservation d'espace mémoire se fait très simplement au moyen d'une variable *available_pages* qui est locale au gestionnaire de mémoire 1 et qui indique le nombre de pages mémoires disponibles sur le cluster. Lors d'une requête de réservation de *nb_pages* pour la tâche *id_task,* le gestionnaire de mémoire 1 vérifie qu'il y a suffisamment de pages disponibles et les réserve si possible. La simple soustraction de *nb_pages* à *available_pages* permet cette réservation, dès lors que toute requête de placement de données est précédée d'une requête de réservation.

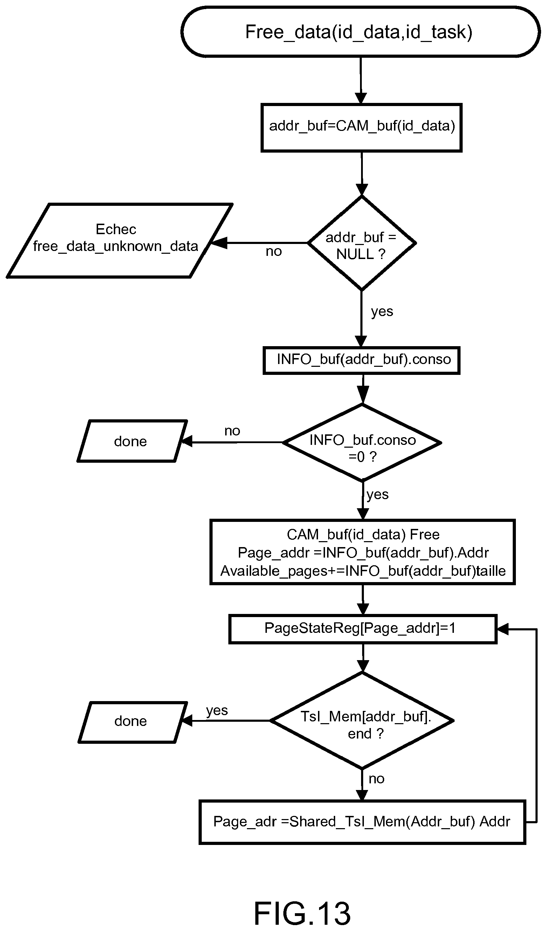

La figure 13 illustre par un diagramme d'activité un exemple de fonctionnement du gestionnaire de mémoire 1 selon l'invention, pour traiter une requête *Free_data* de libération de tampons de données. Sur réception d'une requête de libération de tampon *Free_data(id_data,id_task),* le gestionnaire de mémoire 1 lit tout d'abord les informations relatives à ce tampon dans la mémoire *INFO_buf.* Une erreur est renvoyée à destination du gestionnaire de tâches 2 si l'identifiant de données *id_data* est inconnu ou si le tampon n'est pas accessible en lecture. Dans le cas contraire, le nombre de consommateurs *nb_conso* associé à ce tampon est décrémenté. S'il atteint 0, les pages mémoires associées à ce tampon de données sont alors libérées une à une, en parcourant la liste des pages physiques utilisées pour le tampon et stockée dans *Shared_Tsl_Mem.* Un champ associé à chaque élément de la liste permet d'identifier le dernier élément de celle-ci et donc de terminer la boucle de libération.

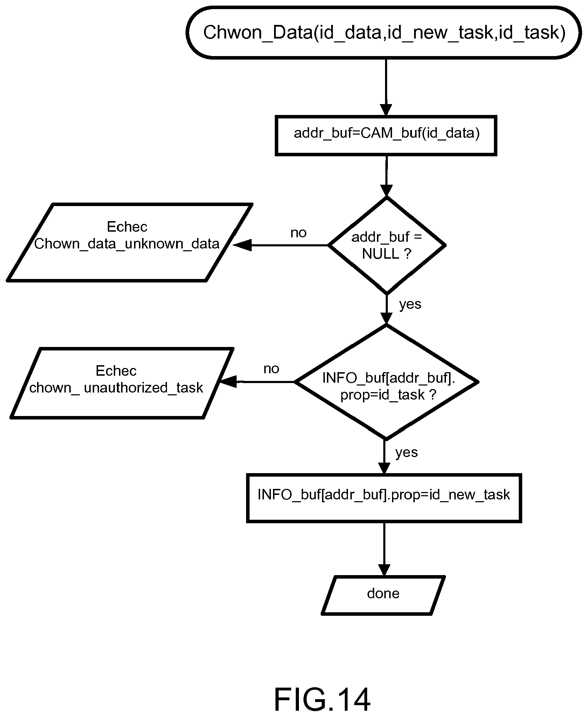

La figure 14 illustre par un diagramme d'activité un exemple de fonctionnement du gestionnaire de mémoire 1 selon l'invention, pour traiter une requête *Chown_data* de changement de propriétaire d'un tampon de données. Il s'agit ici uniquement de vérifier la validité de la requête en constatant que le tampon est bien référencé et que l'émetteur de la requête est bien le propriétaire du tampon. Si la requête est valide, elle est traitée par la modification du champ propriétaire de la mémoire *INFO_buf.*

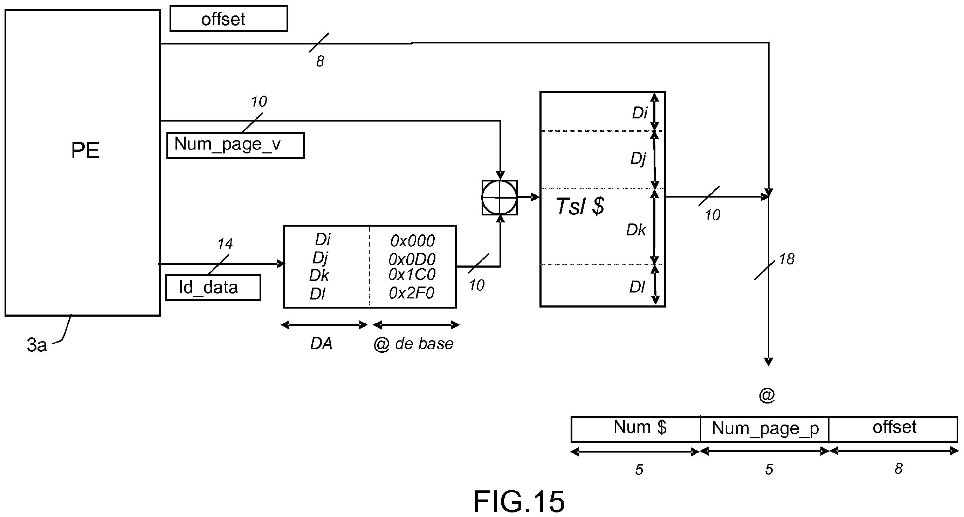

La figure 15 illustre par un diagramme de structure un exemple d'unité de traduction selon l'invention, assurant la conversion des adresses virtuelles en adresses physiques pour une unité de traitement 3a du groupement 3. Ces traductions sont systématiquement et automatiquement réalisées lors d'une lecture ou d'une écriture en mémoire, suivant un mécanisme illustré sur la figure 15. L'élément de base utilisé pour réaliser la traduction est une table de traduction, contenant dans le présent exemple de réalisation 1024 entrées, ce qui correspond à la capacité de mémorisation du cluster exprimée en nombre de pages. Cette table contient les traductions utiles à chacune des adresses manipulées dans la tâche en cours d'exécution sur l'unité de traitement. La table de traduction est construite sur la base d'une mémoire standard *Tsl_$.* Le chargement de cette table de traduction est réalisé à l'initialisation de la tâche, suite à des requêtes *Get_Memory_Map(id_data, id_ctx)* envoyées pour chacun des tampons manipulés dans la tâche, aussi bien en lecture qu'en écriture. Lors de l'envoi de cette requête, l'unité de traduction de l'unité de traitement rempli une mémoire associative de type CAM en précisant pour le tampon *id_data,* l'adresse à partir de laquelle va être rangée la table de traduction du tampon dans la mémoire *Tsl_ $,* sachant que les tampons sont rangés consécutivement dans cette mémoire.

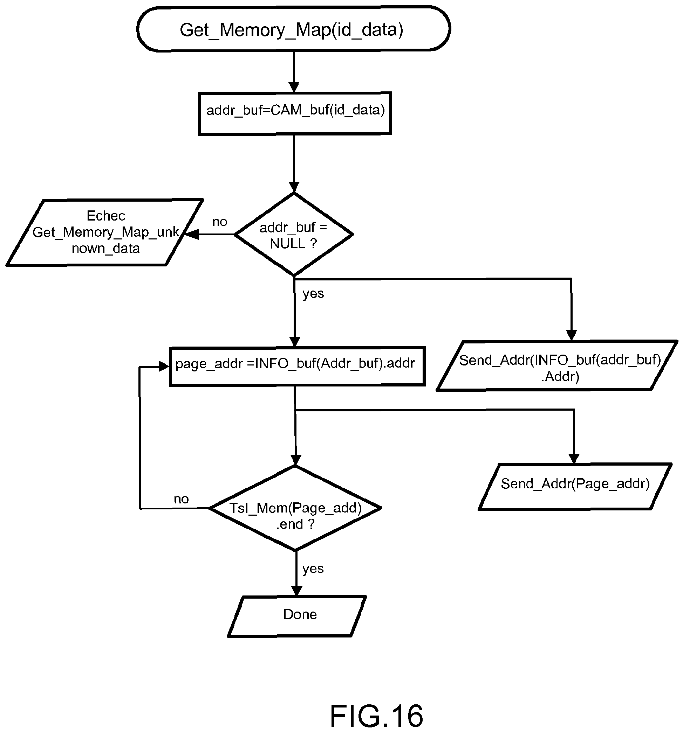

La figure 16 illustre par un diagramme d'activité un exemple de fonctionnement du gestionnaire de mémoire 1 selon l'invention, pour traiter une requête *Get_Memory_Map* de transfert de table de traduction. Sur réception d'une requête *Get_Memory_Map(id_data),* le gestionnaire de mémoire 1 vérifie d'une part la validité de la requête et parcourt d'autre part la liste ordonnée des pages physiques utilisées pour le tampon *id_data.* Il est à noter ici que le champ *id_ctx* de la requête n'est dans cet exemple pas exploité, mais qu'il pourrait l'être dans le cadre d'optimisations. Parallèlement à ces opérations, l'unité de traduction de l'unité de traitement ayant initié la requête remplit la mémoire *Tsl_$* en incrémentant l'adresse d'écriture à chaque réception d'un nouveau numéro de page physique. Ainsi la mémoire *Tsl_$* contient la liste des traductions ordonnées suivant les numéros d'adresse virtuelle. Ainsi, chaque mot de la mémoire *Tsl_$* contient un numéro de page physique correspondant à une adresse virtuelle égale à la position du mot dans la mémoire. Cette adresse virtuelle est obtenue en additionnant l'adresse de base dans la mémoire *Tsl_$* de la table de traduction du tampon *id_data,* au numéro de page virtuelle *Num_page_v* décrivant la page manipulée dans ce tampon. Une optimisation possible à ce niveau est de faire cette addition au moment de la compilation. L'adresse manipulée dans les unités de traitement a alors pour poids fort la somme de l'identifiant de la donnée et du numéro de page virtuel, ce qui permet de s'abstenir de réaliser cette addition en matériel. La mémoire de type CAM contient quant à elle autant d'entrées que de tampons manipulables dans une tâche.

Le dernier élément du gestionnaire de mémoire 1 permet de gérer les droits d'accès aux données et ainsi de garantir l'intégrité des données manipulées. Il est utilisé pour s'assurer qu'une donnée n'est pas lue avant d'avoir été produite et inversement qu'elle n'est pas modifiée pendant sa lecture. Il répond aux requêtes *Ask_dispo* issues des unités de traitement en fonction des droits actuels des pages de données manipulées. Elle met également à jour les droits d'accès à ces pages suites aux requêtes *Send_free* et *Send_dispo.* Il est à noter que, dans le présent exemple de réalisation, des requêtes bloquantes sont considérées. Toutefois, le traitement de demandes de disponibilité globale pourrait être envisagé dans le cadre d'optimisations.

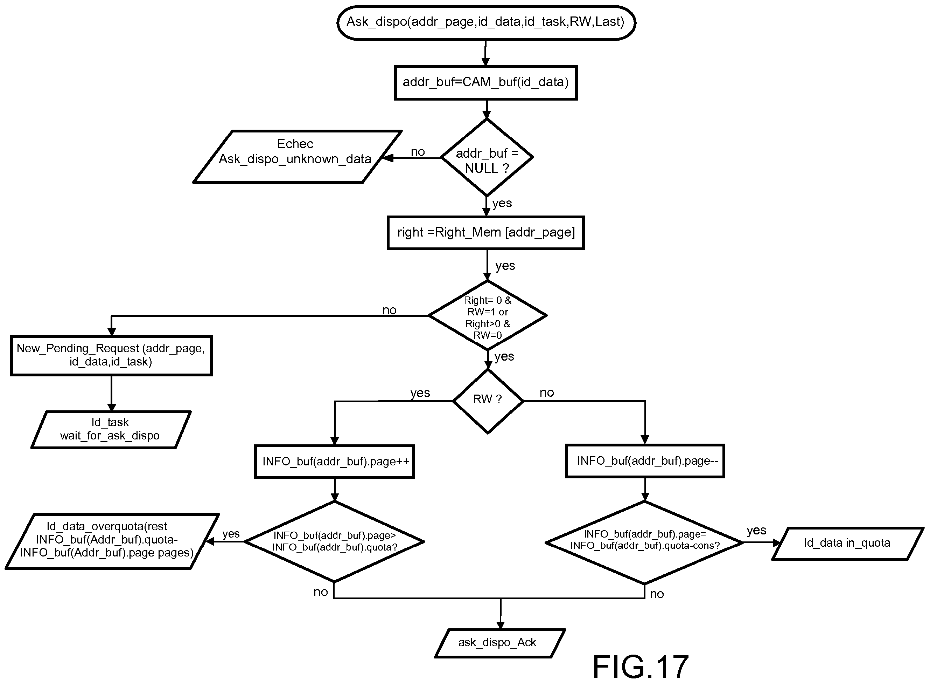

La figure 17 illustre par un diagramme d'activité un exemple de fonctionnement du gestionnaire de mémoire 1 selon l'invention, pour traiter une requête *Ask_dispo* de demande de disponibilités. Il s'agit simplement de comparer le mode d'accès désiré à la page de données *addr_data* au droit d'accès à cette page, stocké dans la mémoire *RightMem.* Si la page n'est pas accessible, par exemple si la page est en lecture lors d'une requête en écriture ou inversement, l'unité de traitement émettrice de la requête est mise en attente et la requête est placée dans une file *pending_request* de requêtes en attente. Dans le cas contraire, le nombre de pages associées au tampon de données est mis à jour, provoquant éventuellement le passage en sur-quota du tampon. Dans ce dernier cas, l'état de remplissage du tampon est remonté au gestionnaire de tâches 2 en vue d'une éventuelle exploitation. Pour une écriture, le champ RW de la requête *Ask_dispo* vaut 1, sinon 0.

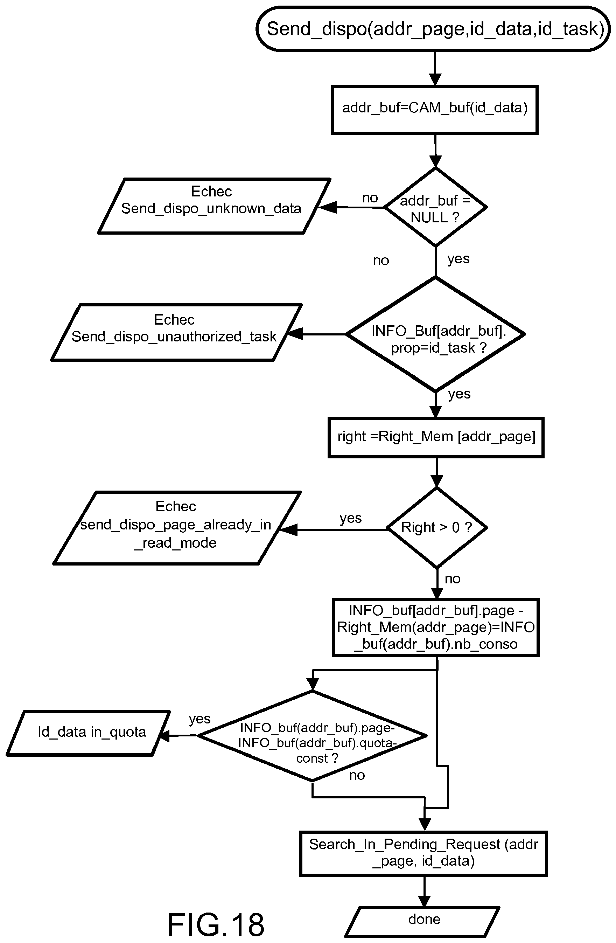

La figure 18 illustre par un diagramme d'activité un exemple de fonctionnement du gestionnaire de mémoire 1 selon l'invention, pour traiter une requête *Send_dispo* de mise à disposition d'une page en lecture. Sur réception d'une requête *Send_dispo,* il est vérifié dans un premier temps que le tampon de données *id_data* est connu et que la requête est envoyée par le propriétaire *id_task* de ce tampon. Il est également vérifié que la page n'est pas déjà disponible en lecture, auquel cas une erreur est renvoyée au gestionnaire de tâches 2, avant de modifier le droit d'accès à la page *addr_page.* Le nombre de pages en écriture associées à ce tampon est également décrémenté et une vérification du quota est faite afin de prévenir éventuellement le gestionnaire de tâches 2 de l'état de remplissage du tampon. Finalement, la liste des requêtes en attente est parcourue afin de vérifier si une tâche avait déjà demandé une disponibilité en lecture de la page, auquel cas sa requête peut être acquittée. Il est à noter dès à présent que le parcours de cette liste des requêtes en attente peut être relativement long, puisque séquentiel. S'il est supposé que 32 tâches peuvent être simultanément actives, un temps de parcours au pire cas d'au minimum 32 cycles est en effet à prendre en compte. Cette recherche pourrait être accélérée dans le cadre d'optimisations.

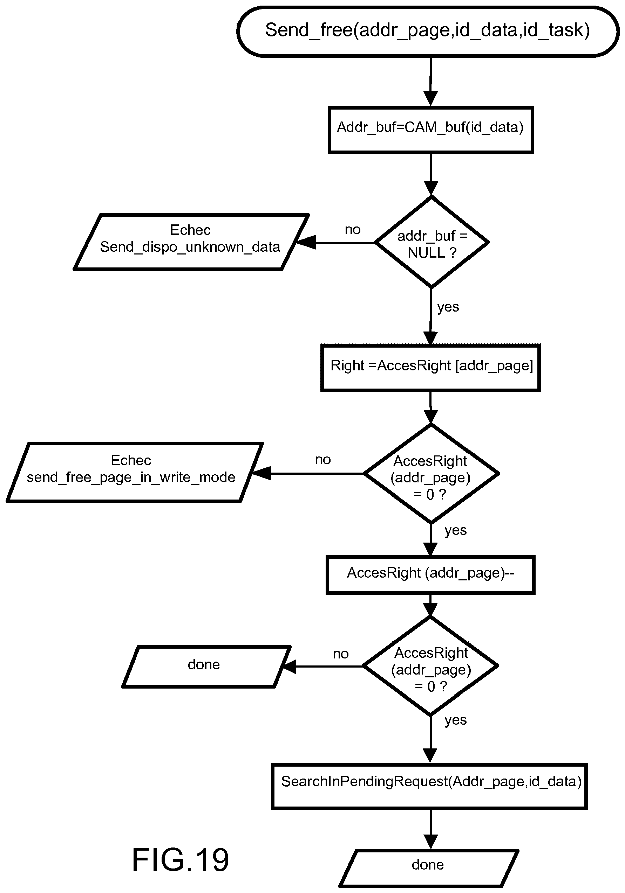

La figure 19 illustre par un diagramme d'activité un exemple de fonctionnement du gestionnaire de mémoire 1 selon l'invention, pour traiter une requête *Send_free* de libération de pages, visant à rendre une page libre et donc disponible pour des écritures. Sur réception d'une requête *Send_free,* le gestionnaire de mémoire 1 vérifie la validité de la requête en s'assurant que le tampon de données *id_data* est connu et que la page n'est pas déjà disponible en écriture, auquel cas une erreur est renvoyée au gestionnaire de tâches 2. Par la suite le nombre de consommateurs associé à la page est décrémenté. Si celui-ci atteint 0, la page peut être libérée et devient accessible pour des accès en écriture. La liste des requêtes en attente est alors parcourue afin de vérifier si une tâche est en attente d'une page disponible en écriture à l'adresse *addr_page,* auquel cas sa requête peut être acquittée.

Pour éviter des réveils de processeurs inutiles lorsqu'une tâche demande successivement les droits d'accès à plusieurs pages, il est possible de mettre en place des demandes de disponibilité « globales », c'est-à-dire pour plusieurs pages dans un tampon, qui ne sont acquittées que lorsque toutes les pages demandées sont disponibles. Un tel mécanisme permet de traiter les demandes de disponibilité d'une tâche globalement plutôt que séquentiellement, en ne rendant bloquante que la dernière requête *Ask_dispo* d'une série, identifiée par le champ *Last de* la requête. Au niveau du gestionnaire de mémoire 1, la mise en place de ce type de requête impose un parcours de la liste *pending_request* lors du traitement de la dernière requête *Ask_dispo* ayant positionné le bit *Last* à 1. Ceci inclut de vérifier qu'aucune autre requête *Ask_dispo* de la tâche *id_task* n'a été mise en défaut et donc que la tâche *id_task* est absente de la file des requêtes en attente, *pending_request.* Avant d'être acquittée, une demande *Ask_dispo* devra ainsi parcourir une liste de toutes les requêtes en attente afin de vérifier si l'une d'entre elle n'appartient pas à la tâche émettrice de la requête. Sans optimisation, ce temps peut être très élevé puisque si l'on considère 32 tâches actives et jusqu'à 16 requêtes *Ask_dispo* par requête de disponibilité globale, pas moins de 512 cycles doivent être considérés. Ces 512 cycles interviennent pour chacune des dernières requêtes *Ask_dispo,* ainsi que lors des requêtes *Send_free* et Send_dispo. Afin de maîtriser les pénalités temporelles associées à la gestion des droits d'accès aux données, il convient donc d'optimiser le parcours de cette liste des requêtes en attente d'acquittement. Une première optimisation, sans surcoût silicium, est simplement de dissocier les files des requêtes en lecture et en écriture. Pour accélérer plus encore la recherche, il est possible de distinguer les files de recherche en fonction de la tâche émettrice de la requête. La logique nécessaire à la recherche de la bonne file de recherche à parcourir est alors rajoutée. Ceci permet de déterminer quasi-instantanément si une demande de disponibilité globale peut être acquittée mais n'accélère en revanche pas le traitement des requêtes *Send_dispo* et *Send_free.* Pour être accélérées, il convient de tenir à jour des listes de demandes de disponibilité séparées en fonction du tampon de donnée manipulé et d'implémenter la logique pour retrouver la bonne liste en fonction d'un identifiant de données.

L'invention décrite précédemment a pour principal avantage de proposer un mécanisme optimisé de partage des tampons entre les tâches de production et les tâches de consommation non synchronisées.

### ANNEXE 1

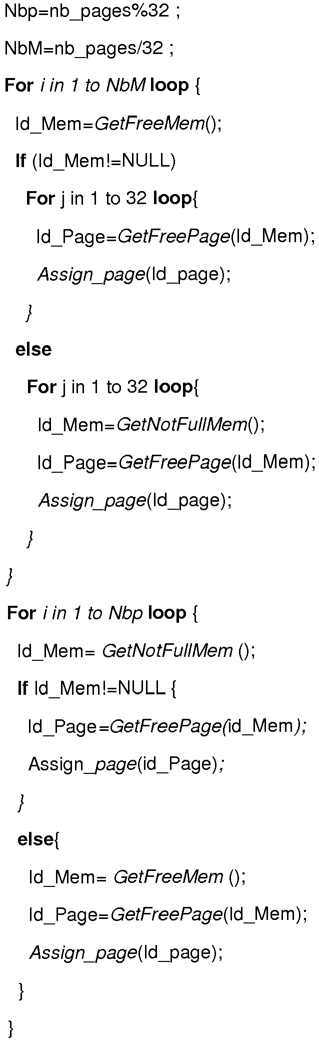

## Revendications

1. Dispositif pour gérer des tampons de données dans un espace mémoire réparti sur une pluralité d'éléments de mémoire, l'espace mémoire étant allouable par pages mémoires, chaque tampon comportant une ou plusieurs pages mémoires, les tampons étant utilisables par au moins une unité de traitement (3a) pour l'exécution d'une application, l'application étant exécutée par une pluralité d'unités de traitement (3) exécutant des tâches en parallèle, les éléments de mémoire étant accessibles en parallèle par les unités de traitement, le dispositif comportant des moyens pour allouer des tampons (1) aux tâches pendant l'exécution de l'application et des moyens de gestion de droits d'accès aux tampons, le dispositif étant **caractérisé en ce que** les moyens pour allouer des tampons (1) sont propres à allouer des tampons aux tâches (1) en fonction de l'état de remplissage des tampons, et **en ce que** les moyens de gestion des droits d'accès aux tampons incluent des moyens de gestion de droits d'accès aux pages dans un tampon donné, vérifiant qu'une écriture dans une page donnée ne modifie pas des données en cours de lecture dans ladite page ou qu'une lecture dans une page donnée n'accède pas des données en cours d'écriture dans ladite page, de manière à partager ledit tampon entre des tâches non synchronisées.

2. Dispositif selon la revendication 1, **caractérisé en ce que** les moyens pour allouer des tampons (1) allouent les tampons de manière à minimiser le nombre maximum de tampons alloués à un même élément de mémoire.

3. Dispositif selon l'une des revendications précédentes, **caractérisé en ce que** les moyens pour allouer des tampons (1) incluent des registres d'état de remplissage des pages mémoires, un bit donné dans un registre donné caractérisant l'état vide ou l'état non-vide d'une page mémoire donnée.

4. Dispositif selon la revendication 1, **caractérisé en ce que** les moyens pour allouer des tampons (1) incluent :
- des registres d'état de remplissage des éléments de mémoire, un bit donné dans un registre donné caractérisant l'état vide ou l'état non-vide d'un élément de mémoire donné, et/ou ;
- des registres d'état de creux des éléments de mémoire, un bit donné dans un registre donné caractérisant l'état partiellement plein ou l'état non partiellement plein d'un élément de mémoire donné.

5. Dispositif selon les revendications 3 et 4, **caractérisé en ce que** les moyens pour allouer des tampons (1) incluent des moyens pour réaliser des opérations logiques :
- de type ET sur les registres d'état de remplissage des pages mémoires, de manière à accélérer la mise à jour des registres d'état de remplissage des éléments de mémoires, et/ou ;
- de type OU exclusif sur les registres d'état de remplissage des pages mémoires, de manière à accélérer la mise à jour des registres d'état de creux des éléments de mémoires.

6. Dispositif selon la revendication 4, **caractérisé en ce que** les moyens pour allouer des tampons (1) incluent un encodeur de priorité permettant de déterminer en un seul cycle le premier bit à 1 dans les registres d'état de remplissage et de creux des éléments de mémoires.

7. Dispositif selon la revendication 1, comportant des moyens pour désallouer des tampons (1) pendant l'exécution de l'application, **caractérisé en ce que**, les adresses physiques des données contenues dans un tampon étant variables si ledit tampon est désalloué puis ré-alloué au cours de l'exécution de l'application, l'unité de traitement (3a) utilise des adresses virtuelles invariables pour exécuter l'application et le dispositif comporte des moyens pour traduire les adresses virtuelles en adresses physiques.

8. Dispositif selon la revendication 7, **caractérisé en ce que** les moyens pour traduire les adresses virtuelles en adresses physiques incluent au moins une structure pour stocker des correspondances entre des adresses virtuelles et des adresses physiques.

9. Dispositif selon la revendication 8, **caractérisé en ce que** les correspondances entre les adresses virtuelles et les adresses physiques des données contenues dans un tampon donné sont stockées dans une ou plusieurs structures dédiées audit tampon.

10. Dispositif selon la revendication 7, **caractérisé en ce que** les moyens pour traduire les adresses virtuelles en adresses physiques incluent des copies des structures de stockage dans chaque unité de traitement.

11. Dispositif selon la revendication 1, **caractérisé en ce que** les moyens de gestion de droits d'accès aux tampons incluent des moyens pour vérifier qu'une tâche donnée est autorisée à écrire des données dans un tampon donné.

12. Dispositif selon la revendication 1, **caractérisé en ce que** les moyens de gestion de droits d'accès aux tampons incluent des moyens pour vérifier que le nombre de tâches lisant dans un tampon donné n'excède pas un seuil prédéfini.

13. Dispositif selon la revendication 1, **caractérisé en ce que** les moyens de gestion de droits d'accès aux tampons incluent des moyens pour retirer à une tâche le droit d'écrire dans un tampon et autoriser une autre tâche à écrire dans ledit tampon.

14. Dispositif selon la revendication 1, **caractérisé en ce que** les moyens pour allouer des tampons incluent des moyens pour vérifier que l'espace mémoire disponible est suffisant pour allouer un tampon donné.

15. Dispositif selon la revendication 1, **caractérisé en ce que** les moyens pour allouer des tampons et les moyens de gestion des droits d'accès aux pages permettent, en une seule requête d'allocation, d'allouer à une tâche donnée plusieurs pages dans un tampon donné.

## Patentansprüche

1. Vorrichtung zum Verwalten von Datenpuffern in einem über eine Vielzahl von Speicherelementen verteilten Speicherbereich, wobei der Speicherbereich je Speicherseite zugeteilt wird, wobei jeder Puffer eine oder mehrere Speicherseiten aufweist, wobei die Puffer durch mindestens eine Verarbeitungseinheit (3a) für die Ausführung einer Anwendung einsetzbar sind, wobei die Anwendung durch eine Vielzahl von Verarbeitungseinheiten (3) ausgeführt wird, die Tasks parallel ausführen, wobei die Speicherelemente parallel durch die Verarbeitungseinheiten zugänglich sind, wobei die Vorrichtung Mittel zum Zuweisen von Puffern (1) zu den Tasks während der Anwendungsausführung und Mittel zum Verwalten von Zugriffsrechten zu Puffern aufweist, wobei die Vorrichtung **dadurch gekennzeichnet ist, dass** die Mittel zum Zuweisen von Puffern (1) in der Lage sind, den Tasks Puffer (1) entsprechend dem Füllzustand der Puffer zuzuordnen, und dass die Verwaltungsmittel von Pufferzugriffsrechten Mittel zur Verwaltung von Seitenzugriffsrechten in einem bestimmten Puffer enthalten, wobei überprüft wird, dass das Schreiben auf einer bestimmten Seite keine Daten verändert, die auf der Seite gelesen werden, oder dass das Lesen auf einer bestimmten Seite keinen Zugriff auf Daten hat, die auf der Seite geschrieben werden, um den Puffer unter nicht synchronisierten Tasks zu verteilen.

2. Vorrichtung nach Anspruch 1, **dadurch gekennzeichnet, dass** die Mittel zum Zuweisen von Puffern (1) die Puffer auf eine Weise zuweisen, um die Höchstzahl der demselben Speicherelement zugeteilten Puffer zu minimieren.

3. Vorrichtung nach einem der vorhergehenden Ansprüche, **dadurch gekennzeichnet, dass** die Mittel zum Zuweisen von Puffern (1) Füllzustandsregister von Speicherseiten enthalten, wobei ein bestimmtes Bit in einem bestimmten Register den leeren Zustand oder den nicht leeren Zustand einer bestimmten Speicherseite kennzeichnet.

4. Vorrichtung nach Anspruch 1, **dadurch gekennzeichnet, dass** die Mittel zum Zuweisen von Puffern (1) enthalten:
- Füllzustandsregister der Speicherelemente, wobei ein bestimmtes Bit in einem bestimmten Register den leeren Zustand oder den nicht leeren Zustand eines bestimmten Speicherelements kennzeichnet, und/oder;
- Leerzustandsregister der Speicherelemente, wobei ein bestimmtes Bit in einem bestimmten Register den teilweise vollen Zustand oder teilweise nicht vollen Zustand eines bestimmten Speicherelements kennzeichnet.

5. Vorrichtung nach den Ansprüchen 3 und 4, **dadurch gekennzeichnet, dass** die Mittel zum Zuweisen von Puffern (1) Mittel zum Durchzuführen von Logikoperationen enthalten:
- vom Typ UND auf den Füllzustandsregistern der Speicherseiten, um die Aktualisierung der Füllzustandsregister der Speicherelemente zu beschleunigen, und/oder;
- vom Typ exklusives ODER auf den Füllzustandsregistern von Speicherseiten, um die Aktualisierung der Leerzustandsregister der Speicherelemente zu beschleunigen.

6. Vorrichtung nach Anspruch 4, **dadurch gekennzeichnet, dass** die Mittel zum Zuweisen von Puffern (1) einen Prioritätskodierer enthalten, der es erlaubt, in einem einzigen Zyklus das erste "Eins"-Bit in den Füllzustands- und Leerzustandsregistern der Speicherelemente zu bestimmen.

7. Vorrichtung nach Anspruch 1, die Mittel zum Aufheben der Zuweisung von Puffern (1) während der Anwendungsausführung aufweist, **dadurch gekennzeichnet, dass**, sofern die in einem Puffer enthaltenen physischen Adressen der Daten variabel sind, wenn der Puffer freigegeben wird, danach im Laufe der Anwendungsausführung neu zugeteilt wird, die Verarbeitungseinheit (3a) unveränderliche virtuelle Adressen zum Ausführen der Anwendung nutzt und die Vorrichtung Mittel zum Übersetzen der virtuellen Adressen in physische Adressen aufweist.

8. Vorrichtung nach Anspruch 7, **dadurch gekennzeichnet, dass** die Mittel zum Übersetzen der virtuellen Adressen in physische Adressen mindestens eine Struktur zum Speichern von Übereinstimmungen zwischen virtuellen Adressen und physischen Adressen enthalten.

9. Vorrichtung nach Anspruch 8, **dadurch gekennzeichnet, dass** die Übereinstimmungen zwischen den virtuellen Adressen und den physischen Adressen der in einem bestimmten Puffer enthaltenen Daten in einer oder mehreren dem Puffer zugeordneten Strukturen gespeichert werden.

10. Vorrichtung nach Anspruch 7, **dadurch gekennzeichnet, dass** die Mittel zum Übersetzen der virtuellen Adressen in physische Adressen Kopien der Speicherstrukturen in jeder Verarbeitungseinheit enthalten.

11. Vorrichtung nach Anspruch 1, **dadurch gekennzeichnet, dass** die Verwaltungsmittel für Pufferzugriffsrechte Mittel zum Überprüfen enthalten, dass ein bestimmter Task berechtigt ist, Daten in einen bestimmten Puffer zu schreiben.

12. Vorrichtung nach Anspruch 1, **dadurch gekennzeichnet, dass** die Verwaltungsmittel für Pufferzugriffsrechte Mittel zum Überprüfen enthalten, dass die Anzahl von Tasks, die in einen bestimmten Puffer lesen, einen vordefinierten Schwellenwert nicht übersteigen.

13. Vorrichtung nach Anspruch 1, **dadurch gekennzeichnet, dass** die Verwaltungsmittel für Pufferzugriffsrechte Mittel enthalten, einem Task das Recht zu entziehen, in einen Puffer zu schreiben und einem anderen Task zu erlauben, in den Puffer zu schreiben.

14. Vorrichtung nach Anspruch 1, **dadurch gekennzeichnet, dass** die Mittel zum Zuweisen von Puffern Mittel zum Überprüfen enthalten, dass der verfügbare Speicherbereich zum Zuweisen eines bestimmten Puffers ausreichend ist.

15. Vorrichtung nach Anspruch 1, **dadurch gekennzeichnet, dass** die Mittel zum Zuweisen von Puffern und die Mittel für Seitenzugriffsrechteverwaltung erlauben, in einer einzigen Zuweisungsanfrage einem bestimmten Task mehrere Seiten in einem bestimmten Puffer zuzuweisen.

## Claims

1. Device for managing data buffers in a memory space distributed over a plurality of memory elements, the memory space being able to be allocated by memory pages, each buffer comprising one or more memory pages, the buffers being able to be used by at least one processing unit (3a) for the execution of an application, the application being executed by a plurality of processing units (3) executing tasks in parallel, the memory elements being accessible in parallel by the processing units, the device comprising means for allocating buffers (1) to the tasks during the execution of the application and means for managing access rights to the buffers, the device being **characterised in that** the means for allocating buffers (1) are capable of allocating buffers to the tasks (1) in accordance with the fill state of the buffers, and **in that** the means for managing access rights to the buffers include means for managing access rights to the pages in a given buffer, verifying that writing to a given page does not modify data currently being read from said page or that reading from a given page does not access data currently being written to said page, in order to share said buffer between unsynchronised tasks.

2. Device according to claim 1, **characterised in that** the means for allocating buffers (1) allocate the buffers in order to minimise the maximum number of buffers allocated to the same memory element.

3. Device according to either of the preceding claims, **characterised in that** the means for allocating buffers (1) include memory page fill state registers, a given bit in a given register characterising the empty state or non-empty state of a given memory page.

4. Device according to claim 1, **characterised in that** the means for allocating buffers (1) comprise:
- memory element fill state registers, a given bit in a given register characterising the empty state or non-empty state of a given memory element, and/or;
- memory element gap state registers, a given bit in a given register characterising the partially full or not partially full state of a given memory element.

5. Device according to claims 3 and 4, **characterised in that** the means for allocating buffers (1) include means for carrying out logic operations:
- of the AND type on the memory page fill state registers in order to accelerate the updating of the fill state registers of the memory elements, and/or;
- of the exclusive OR type on the fill state registers of the memory pages in order to accelerate the updating of the memory element gap state registers.

6. Device according to claim 4, **characterised in that** the means for allocating buffers (1) include a priority encoder which enables determination in a single cycle of the first bit at 1 in the fill state registers and memory element gap registers.

7. Device according to claim 1, comprising means for deallocating buffers (1) during the execution of the application, **characterised in that**, the physical addresses of the data contained in a buffer being variable if said buffer is deallocated and then reallocated during the execution of the application, the processing unit (3a) uses invariable virtual addresses in order to carry out the application and the device comprises means for translating the virtual addresses into physical addresses.

8. Device according to claim 7, **characterised in that** the means for translating the virtual addresses into physical addresses include at least one structure for storing correspondences between virtual addresses and physical addresses.

9. Device according to claim 8, **characterised in that** the correspondences between the virtual addresses and the physical addresses of the data contained in a given buffer are stored in one or more structures dedicated to said buffer.

10. Device according to claim 7, **characterised in that** the means for translating the virtual addresses into physical addresses include copies of the storage structures in each processing unit.

11. Device according to claim 1, **characterised in that** the means for managing access rights to the buffers include means for verifying that a given task is authorised to write data to a given buffer.

12. Device according to claim 1, **characterised in that** the means for managing access rights to the buffers include means for verifying that the number of tasks reading from a given buffer does not exceed a predefined threshold.

13. Device according to claim 1, **characterised in that** the means for managing the access rights to the buffers include means for withdrawing from a task the right to write to a buffer and for authorising another task to write to the buffer.

14. Device according to claim 1, **characterised in that** the means for allocating buffers include means for verifying that the memory space available is sufficient to allocate a given buffer.

15. Device according to claim 1, **characterised in that** the means for allocating buffers and the means for managing access rights to the pages enable several pages to be allocated to a given task in a given buffer in a single allocation request.
